# EUROPÄISCHE PATENTSCHRIFT

(11) **EP 3 573 866 B1**
(45) Veröffentlichungstag und Bekanntmachung des Hinweises auf die Patenterteilung: **09.03.2022**
(21) Anmeldenummer: 18700276.1
(22) Anmeldetag: 09.01.2018
(51) Int. Cl.: B60R 25/24, G07C 9/00

(54) **VERFAHREN ZUM VERIFIZIEREN EINES VORGEGEBENEN RÄUMLICHEN MAXIMALABSTANDS EINES FUNKSCHLÜSSELS BEZÜGLICH EINES KRAFTFAHRZEUGS SOWIE STEUERVORRICHTUNG, KRAFTFAHRZEUG UND FUNKSCHLÜSSEL**
METHOD FOR VERIFYING A PREDEFINED MAXIMUM SPATIAL DISTANCE OF A RADIO KEY IN RELATION TO A MOTOR VEHICLE, AS WELL AS CONTROL DEVICE, MOTOR VEHICLE AND RADIO KEY
PROCÉDÉ POUR VÉRIFIER UNE DISTANCE SPATIALE MAXIMALE PRÉDÉFINIE ENTRE UNE CLÉ À RADIOCOMMANDE ET UN VÉHICULE AUTOMOBILE, DISPOSITIF DE COMMANDE, VÉHICULE AUTOMOBILE ET CLÉ À RADIOCOMMANDE

(30) Priorität: 27.01.2017 DE 102017201308
(43) Veröffentlichungstag der Anmeldung: 04.12.2019
(73) Patentinhaber: Continental Automotive GmbH, 30165 Hannover (DE)
(72) Erfinder: PLATTNER, Franz, 93473 Arnschwang (DE); HERMANN, Stefan, 91077 Neunkirchen am Brand (DE); HEINRICH, Alexander, 93093 Donaustauf (DE)
(74) Vertreter: Continental Corporation
(86) Internationale Anmeldenummer: PCT/EP2018/050475
(87) Internationale Veröffentlichungsnummer: WO 2018/137923

(56) Entgegenhaltungen:
- EP-A2- 0 992 408
- EP-A2- 1 033 585
- WO-A1-2004/036242
- WO-A1-2016/046105
- DE-A1- 10 045 776

## Beschreibung

Verfahren zum Verifizieren eines vorgegebenen räumlichen Maximalabstands eines Funkschlüssels bezüglich eines Kraftfahrzeugs sowie Steuervorrichtung, Kraftfahrzeug und Funkschlüssel Die Erfindung betrifft ein Verfahren zum Verifizieren, dass ein Abstand eines Funkschlüssels zu einem Kraftfahrzeug innerhalb eines vorgegebenen räumlichen Maximalabstands liegt. Zu der Erfindung gehören auch eine Steuervorrichtung zum Durchführen des Verfahrens sowie ein Kraftfahrzeug mit der Steuervorrichtung.

EP 1 033 585 A2 betrifft ein Verfahren zum Verifizieren eines vorgegebenen räumlichen Maximalabstands eines Funkschlüssels bezüglich eines Kraftfahrzeugs.

DE 100 45 776 A1 betrifft ein Verfahren zum Verifizieren eines eines Funkschlüssels mittels einer Funkeinrichtung eines Kraftfahrzeuges.

Zum Autorisieren einer Person gegenüber einer Schließanlage eines Kraftfahrzeugs und/oder einer Wegfahrsperre des Kraftfahrzeugs, kann die Person einen Funkschlüssel mit sich führen. Wird der Funkschlüssel innerhalb eines vorgegebenen Maximalabstands zum Kraftfahrzeug oder sogar innerhalb des Kraftfahrzeugs erkannt und reagiert der Funkschlüssel auf ein sogenanntes Challenge-Signal (Herausforderungssignal) mit der korrekten Antwort, so wird daraufhin das Kraftfahrzeug entriegelt und/oder die Wegfahrsperre, beispielsweise eine Motorsperre, aufgehoben.

Das Lokalisieren des Funkschlüssels erfolgt gemäß dem Stand der Technik auf der Grundlage zumindest eines niederfrequenten Funksignals oder LF-Signals (LF - Low Frequency), das bei einer Frequenz kleiner als zum Beispiel 200 kHz von jeweils einer Sendeantenne des Kraftfahrzeugs ausgesendet werden kann. Eine Feldstärke dieses LF-Signals weist einen Normwert auf. Der Funkschlüssel kann die Feldstärke des bei ihm eintreffenden LF-Signals erfassen, woraus dann der Abstand des Funkschlüssels zu der zumindest einen Sendeantenne des Kraftfahrzeugs ermittelt werden kann. Bei mehreren Sendeantennen ist mittels Trilateration eine Erkennung der Relativposition des Funkschlüssels möglich. Ein solches System ist z.B. unter der Bezeichnung "PASE" (R) des Unternehmens Continental (R) bekannt.

Bei der sogenannten Relais-Attacke (Relay Attack) wird einem Kraftfahrzeug die Nähe eines Funkschlüssels dadurch vorgetäuscht, dass zwischen dem Kraftfahrzeug und einem weit entfernten Funkschlüssel zwei Zwischensender betrieben werden, die jeweilige Funksignals des Kraftfahrzeugs und des Funkschlüssels an die jeweils andere Station weiterleiten, die diese dann wieder abstrahlt. Somit kann dem Funkschlüssel z.B. durch Weiterleiten des Challenge-Signals eine passende Antwort entlockt werden, die dann zum Manipulieren des Kraftfahrzeugs genutzt werden kann. Auch die Messung der Feldstärke eines LF-Signals kann hierdurch nachgestellt werden, ohne dass der Abstand der beiden Zwischenstationen zueinander dabei eine Rolle spielt.

Der Erfindung liegt die Aufgabe zugrunde, den Abstand eines Funkschlüssels zu einem Kraftfahrzeug zuverlässig zu verifizieren.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch die Erfindung ist ein Verfahren bereitgestellt, mittels welchem verifiziert wird, dass ein Abstand eines Funkschlüssels bezüglich eines Kraftfahrzeugs kleiner als ein vorgegebener räumlicher Maximalabstand ist. Eine Steuervorrichtung sendet hierzu mittels einer Funkeinrichtung des Kraftfahrzeugs zumindest ein elektromagnetisches Signal an den Funkschlüssel aus und empfängt daraufhin ein jeweiliges elektromagnetisches Antwortsignal. Zu jedem ausgesendeten Funksignal wird also ein Antwortsignal erwartet oder empfangen. Zu jedem Funksignal wird dann jeweils auf der Grundlage des Funksignals selbst und des zugehörigen Antwortsignals mittels einer Signallaufzeitmessung eine jeweilige Signallaufzeit ermittelt. Für ein einzelnes Funksignal ergibt sich also ein einzelner Wert einer Signallaufzeit, bei mehreren Funksignalen für jedes Funksignal jeweils ein Wert einer Signallaufzeit. Eine Signallaufzeitmessung korreliert das ausgesendete Funksignal mit dem eintreffenden Antwortsignal. Somit ist durch die Signallaufzeitmessung eine absolute Messung des Zeitversatzes zwischen dem ausgesendeten Funksignal und dem empfangenen Funksignal (Antwortsignal) gegeben. Hieran kann auch die zeitliche Verzögerung erkannt werden, die im Rahmen einer Relais-Attacke durch das Weiterleiten zwischen den beiden Zwischenstationen entstehen würde. Die Signallaufzeitmessung geht dabei davon aus, dass das Antwortsignal von dem Funkschlüssel kommt, der das Antwortsignal in Abhängigkeit von dem Funksignal des Kraftfahrzeugs erzeugt, indem z.B. ein Teil des Funksignals zurückgesendet wird, um die Korrelation zwischen Funksignal und Antwortsignal zu ermöglichen. Hierzu weist der Funkschlüssel einen Transceiver auf.

Für jede Signallaufzeit wird überprüft, ob durch die Signallaufzeit ein vorbestimmtes Laufzeitkriterium verletzt ist. Das Laufzeitkriterium kann einen Maximalwert für die ermittelte Signallaufzeit vorgeben. Ist die ermittelte Signallaufzeit größer als dieser Maximalwert, so ist das Laufzeitkriterium verletzt. Bei verletztem Laufzeitkriterium wird eine Laufzeitüberschreitung signalisiert.

Das Verfahren weist den Vorteil auf, dass bei entsprechend gewähltem Laufzeitkriterium eine Relais-Attacke eine Laufzeitüberschreitung verursacht, die angezeigt oder erkannt wird, wodurch eine Manipulation auf der Grundlage einer Relais-Attacke erkannt wird. Ein entsprechendes Laufzeitkriterium kann auf der Grundlage einfacher Versuche ermittelt werden.

Zu der Erfindung gehören auch vorteilhafte Weiterbildungen, durch die sich zusätzliche Vorteile ergeben.

Für eine zuverlässige Signallaufzeitmessung weist die Funkeinrichtung bevorzugt mehrere Transceiver auf, von denen jeder ein Funksignal aussenden und das zugehörige Antwortsignal empfangen kann. Die Steuervorrichtung ermittelt mittels einer Lokalisierungseinrichtung eine Relativposition des Funkschlüssels bezüglich des Kraftfahrzeugs. Auch eine Lage des Funkschlüssels innerhalb des Kraftfahrzeugs wird hierbei erkannt. In Abhängigkeit von der ermittelten Relativposition wählt die Steuervorrichtung zum Aussenden des zumindest einen Funksignals nur einen oder einige der Transceiver, also nicht alle Transceiver, aus und betreibt diese jeweils. Bevorzugt wird nur ein einziger oder es werden nur zwei oder drei oder vier Transceiver ausgewählt. Vorteil hierbei ist, dass der Funkschlüssel nur auf entsprechend wenige Funksignale oder auch nur auf ein einzelnes Funksignal mit dem Erzeugen eines Antwortsignals reagieren muss . Dies ist energieeffizient, was den Betrieb des Funkschlüssels angeht.

In Bezug auf die Frage, welcher Transceiver ausgewählt wird, ist vorgesehen, dass der jeweilige Transceiver anhand eines vorbestimmten Sichtkriteriums ausgewählt wird. Das Sichtkriterium fordert z.B. eine von Metall des Kraftfahrzeugs unverdeckte Sichtlinie zwischen dem jeweils ausgewählten Transceiver und dem Funkschlüssel. Die Signallaufzeitmessung wird hierdurch zuverlässig. Allgemein erfolgt mittels des Sichtkriteriums eine Zuordnung der durch die Lokalisierungseinrichtung signalisierten Relativposition des Funkschlüssels zu einer Auswahl eines Transceiver oder einiger Transceiver aus den insgesamt am Kraftfahrzeug bereitgestellten Transceivern. Beispielsweise kann durch die Lokalisierungseinrichtung als Angabe der Relativposition aus mehreren vorgegebenen Zonen eine Zone angegeben werden. Für jede Zone kann dann jeweils eine Auswahl eines oder einige der Transceiver festgelegt sein. Dies kann beispielsweise auf der Grundlage einer Tabelle erfolgen.

Zum Lokalisieren des Funkschlüssels kann die aus dem Stand der Technik bekannte Lokalisierung auf Grundlage zumindest eines LF-Signals mit einer Frequenz kleiner als 200 kHz verwendet werden (PASE-System). Dieses LF-Signal wird mit einer vorgegebenen Feldstärke ausgesendet, und zwar jeweils ein LF-Signal mittels einer jeweiligen Sendeantenne der Lokalisierungseinrichtung. Aus dem Funkschlüssel empfängt die Lokalisierungseinrichtung zu jedem LF-Signal einen Empfangsfeldstärkewert. Daraus kann dann die Relativposition des Funkschlüssels ermittelt werden, um beispielsweise das Sichtkriterium zu überprüfen. Alternativ zum Empfangen von Empfangsfeldstärkewerten kann auch vorgesehen sein, dass die Auswertung im Funkschlüssel erfolgt und die Lokalisierungseinrichtung eine Positionsangabe aus dem Funkschlüssels empfängt. Die Weiterbildung weist den Vorteil auf, dass ein aus dem Stand der Technik bekanntes Schließsystem mit Funkschlüssel genutzt werden kann, um den zumindest einen Transceiver für die Signallaufzeitmessung auszuwählen.

Ein geeignetes Funksignal für die Signallaufzeitmessung stellt ein UWB-Funksignal (UWB - Ultra Wide Band, Frequenzbereiche größer als 1 GHz, Bandbreite größer als 100 MHz) und/oder die Verwendung eines Bluetooth-Funksignals dar. Ein Funksignal des besagten jeweiligen Typs ermöglicht eine Ortsauflösung beim Ermitteln des Abstands des Funkschlüssels zum Kraftfahrzeug, die kleiner als 2 m, insbesondere kleiner als 1 m, ist.

Um das erfindungsgemäße Verfahren in einem Kraftfahrzeug durchführen zu können, ist durch die Erfindung auch eine Steuervorrichtung für ein Kraftfahrzeug bereitgestellt. Die Steuervorrichtung weist eine elektronische Schaltung auf, die dazu eingerichtet ist, eine Ausführungsform des erfindungsgemäßen Verfahrens durchzuführen. Die Steuervorrichtung kann beispielsweise als ein Steuergerät für das Kraftfahrzeug ausgestaltet sein. Die Steuervorrichtung kann auch als eine verteilte Schaltung ausgestaltet sein, um die Signallaufzeitmessung in oder an jedem Transceiver der Funkeinrichtung durchführen zu können.

Zu der Erfindung gehört auch ein Kraftfahrzeug, das die besagte Funkeinrichtung aufweist, die Transceiver zum Aussenden eines jeweiligen elektromagnetischen Funksignals und zum Empfangen eines jeweiligen elektromagnetischen Antwortsignals aufweist. Insbesondere ist die Funkeinrichtung dazu eingerichtet, als jeweiliges Funksignal ein UWB-Funksignal und/oder ein Bluetooth-Funksignal auszusenden und ein Signal desselben Signaltyps als Antwortsignal zu empfangen.

Das erfindungsgemäße Kraftfahrzeug zeichnet sich durch eine Ausführungsform der erfindungsgemäßen Steuervorrichtung aus, die mit der Funkeinrichtung gekoppelt ist.

Bevorzugt weist das Kraftfahrzeug auch eine Lokalisierungseinrichtung zum Ermitteln eine Relativposition eines Funkschlüssels bezüglich des Kraftfahrzeugs auf. Hierdurch kann in der beschriebenen Weise durch die Steuervorrichtung ein einzelner Transceiver oder einige der insgesamt vorhandenen Transceiver für die Signallaufzeitmessung ausgewählt werden.

Das erfindungsgemäße Kraftfahrzeug ist bevorzugt als Kraftwagen, insbesondere als Personenkraftwagen oder Lastkraftwagen, ausgestaltet.

Um die Signallaufzeitmessung durchführen zu können, ist als Gegenstück zu der Funkeinrichtung des Kraftfahrzeugs auch ein Funkschlüssel für ein Kraftfahrzeug nötig. Dieser ist durch die Erfindung ebenfalls bereitgestellt und weist eine aktive Transpondereinheit auf, die dazu eingerichtet ist, mittels Energie aus einem Energiespeicher des Funkschlüssels, beispielsweise aus einer Batterie, ein elektromagnetisches Funksignal aus einer Umgebung zu empfangen und in Abhängigkeit von dem Funksignal ein elektromagnetisches Antwortsignal in die Umgebung zurückzusenden. Der Funkschlüssel ermöglicht es somit der Steuervorrichtung in dem Kraftfahrzeug, die besagte Laufzeitmessung durchzuführen.

Insbesondere ist die Transpondereinheit dazu eingerichtet, ein UWB-Funksignal und/oder ein Bluetooth-Funksignal in der beschriebenen Weise zu empfangen und als Antwortsignal wieder zurückzusenden.

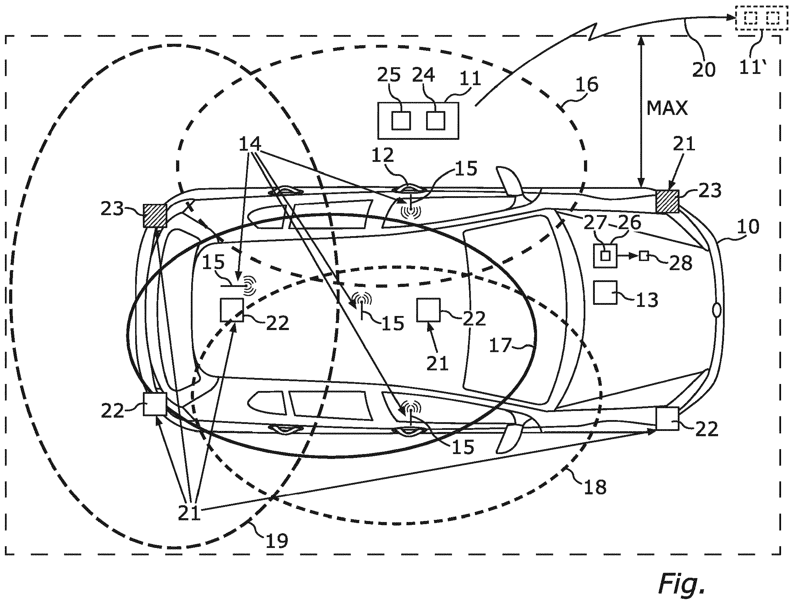

Im Folgenden ist ein Ausführungsbeispiel der Erfindung beschrieben. Hierzu zeigt die einzige Figur (Fig.) eine schematische Darstellung einer Ausführungsform eines Systems aus einem Kraftfahrzeug und einem Funkschlüssel, die beide jeweils eine Ausführungsform der Erfindung darstellen.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt ein Kraftfahrzeug 10, bei dem es sich um einen Kraftwagen, insbesondere einen Personenkraftwagen oder Lastkraftwagen handeln kann. In dem Beispiel kann sich ein Benutzer (nicht dargestellt) mit einem Funkschlüssel 11 dem Kraftfahrzeug 10 genähert haben. Beispielsweise durch Betätigung eines Türgriffs 12 kann in an sich bekannter Weise durch ein Schließsystem 13 des Kraftfahrzeugs 10 eine Überprüfung des Funkschlüssels 11 ausgelöst werden.

Für die Überprüfung kann das Kraftfahrzeug 10 eine Lokalisierungseinrichtung 14 aufweisen, die Antennen 15 zum Aussenden eines jeweiligen LF-Signals vorsehen kann. Durch die jeweilige Reichweite des LF-Signals jeder Antenne 15 können sich, wie in der Figur gezeigt, beispielsweise eine linke Zone 16, eine Innenraumzone 17, eine rechte Zone 18 und eine Heckzone 19 ergeben, der die Position des Funkschlüssels 11 jeweils zugeordnet werden kann. In dem Funkschlüssel 11 können hierzu die jeweilige Empfangsfeldstärke jedes LF-Signals der Antennen 15 gemessen oder erfasst werden. Jede Zone 16, 17, 18, 19 repräsentiert dann jeweils eine mögliche, durch die Lokalisierungseinrichtung 14 erkennbare Relativposition des Funkschlüssels 11 bezüglich des Kraftfahrzeugs 10.

Um zu verifizieren, dass Signale des Kraftfahrzeugs 10 und des Funkschlüssels 11 nicht mittels einer Relais-Attacke 20 weitergeleitet werden und es sich nicht um einen weit entfernten Funkschlüssel 11' handelt, weist das Kraftfahrzeug 10 zusätzlich eine Funkeinrichtung 21 auf, die mehrere Transceiver 22, 23 zum jeweiligen Aussenden eines UWB-Funksignals und/oder Bluetooth-Funksignals und zum Empfangen eines korrespondierenden oder korrelierten Antwortsignals aufweist.

Mittels jedes Transceivers 22, 23 kann somit ein Funksignal an den Funkschlüssel 11 ausgesendet werden, zu welchem dieser mittels einer Transpondereinheit 24 ein Antwortsignal zurücksenden kann. Wegen der Problematik der Abschattung im Gigahertz-Sendebereich für die Funksignale durch das Kraftfahrzeug 10 selbst oder auch durch eine Person, werden bevorzugt für die Signallaufzeitmessung mehrerer der Transceiver 22, 23 am Kraftfahrzeug 10 bereitgestellt.

Sind aber nun im Kraftfahrzeug 10 mehrere UWB-Transceiver 22, 23 verbaut, so müsste der Funkschlüssel 10 für die Abstandsmessung theoretisch mit jedem dieser Transceiver nacheinander oder zeitlich verschränkt kommunizieren, um mit jedem Transceiver eine Laufzeitmessung durchzuführen. Da der Funkschlüssel 11 für die Kommunikation zur Laufzeitmessung einen höheren Strombedarf aufweist, als die Schlüsselbatterie 25 liefern kann, muss die Energie in geeigneter Weise sogar zwischen gepuffert werden, beispielsweise mittels Kondensatoren. Die Höhe der Energiebedarf, desto höher sind dann auch die Bauteilkosten für den Funkschlüssel 11.

Bei dem Kraftfahrzeug 10 ist eine Möglichkeit gefunden, den Energiebedarf im Funkschlüssel 11 für die Laufzeitmessungen zu reduzieren. Es wird hierzu in dem Kraftfahrzeug 10 eine Entscheidung getroffen, mit welchen der Kraftfahrzeug 10 verbauten Transceiver 22, 23 aktuell die Lauf Zeitmessung zum Funkschlüssel 11 durchgeführt werden soll.

Dies kann durch einen der Steuervorrichtung 26 erfolgen, die beispielsweise als ein Steuergerät des Kraftfahrzeugs 10 ausgestaltet sein kann.

Es wird nicht jeder Transceiver 22, 23 genutzt, sondern nur eine Auswahl aus Transceivern, im Beispiel die Transceiver 23, die dahingehend ausgewählt werden, dass sie abhängig von der Zone, in welcher der Funkschlüssel 11 lokalisiert wurde, ausgewählt werden. Hierdurch ist sichergestellt, dass sich eine freie Sicht auf den Funkschlüssel 11 für das jeweilige elektromagnetische Funksignal des Transceivers 23 ergibt.

Das Kraftfahrzeug 10 kann hierzu das PASE-System, d.h. die Lokalisierungseinrichtung 14, über die der Funkschlüssel 11 am Kraftfahrzeug 10 in Bezug auf die jeweilige Zone 16, 17, 18, 19 lokalisiert werden kann.

Mittels UWB-Signallaufzeitmessung oder BLE-Signallaufzeitmessung (BLE - Bluetooth Low Energy) kann dann der Abstand des Funkschlüssels 11 zum Kraftfahrzeug 10 gemessen werden, um den Relais-Angriff 20 zum Entriegeln oder Starten des Kraftfahrzeugs 10 abzuwehren.

In dem Kraftfahrzeug 10 wird also zunächst über die LF-Lokalisierung der Lokalisierungseinrichtung 14 zum Beispiel bei 125 kHz (kleiner als 200 kHz) ermittelt, wo sich der Funkschlüssel 11 relativ zum Kraftfahrzeug 10 befindet. Bei dieser Lokalisierung ist aber der mögliche Relais-Angriff 20 nicht berücksichtigt. Um den Relais-Angriff 20 zu erkennen, wird die UWB/ BLE-Laufzeitmessung mit so wenig Transceivern 23 wie möglich durchgeführt, zumindest aber die Anzahl der verwendeten Transceiver 23 kleiner als die Gesamtzahl der Transceiver 22, 23 gehalten.

Nach der LF-Lokalisierung wird entschieden, über welchen oder über welche der Transceiver 22, 23 die Laufzeitmessung durchgeführt werden soll. Wurde zum Beispiel der Funkschlüssel 11 im Innenraum lokalisiert (Innenraumzone 17), so kann die Laufzeitmessung vom/zum Schlüssel mit einem oder zwei Innenraum-Transceivern durchgeführt werden. Die Außenraum-Transceiver werden dann nicht benötigt. D.h. im Funkschlüssel 11 muss dann nur Energie für 2 statt der dargestellten 6 Transceiver 22, 23 und die Durchführung der Laufzeitmessung mit jedem davon gepuffert werden. Wurde der Funkschlüssel 11 im Außenraum zum Beispiel links lokalisiert (linke Zone 16, wie dargestellt), wird die Laufzeitmessung vom/zum Schlüssel mit den beiden links am Kraftfahrzeug 10 angebrachten Transceivern 23 durchgeführt. Die Innenraum-Transceiver und die Außenraum-Transceiver an der gegenüberliegenden Fahrzeugseite des Kraftfahrzeugs 10 werden dann nicht benötigt, d.h. im Funkschlüssel 11 muss wieder nur Energie für 2 statt 6 Laufzeitmessungen gepuffert werden.

Durch die Verringerung der Anzahl der erforderlichen Laufzeitmessungen im Gigahertz-Bereich (UWB, BLE) wird im Funkschlüssel 11 weniger Energie zur Laufzeitmessung oder für die Laufzeitmessung benötigt. Die erforderlichen Energiepuffer können mit weniger und/oder kleineren Bauteilen realisiert werden. Dadurch kann der Funkschlüssel 11 kostengünstiger hergestellt werden.

Beispielsweise kann mittels der Laufzeitmessung erkannt werden, ob sich der Funkschlüssel innerhalb eines Maximalabstands MAX vom Kraftfahrzeug entfernt befindet. Der Wert von MAX kann beispielsweise in einem Bereich von 1 m bis 3 m liegen. Ein solches Laufzeitkriterium 27 kann durch die Steuervorrichtung 26 überprüft werden, z.B. mittels eine Mikrocontrollers oder einer Vergleichsschaltung (z.B. auf Basis eines Operationsverstärkers) oder einer Vergleichslogik.

Liegt eine Relais-Attacke 20 vor, so ergibt sich ein Wert für die ermittelte Laufzeit, der größer als ein Schwellenwert ist. Dieser Schwellenwert ergibt sich für den vorgegebenen Wert von MAX. Die Laufzeitüberschreitung 28 kann durch die Steuervorrichtung 26 in dem Kraftfahrzeug 10 signalisiert werden.

Insgesamt zeigt das Beispiel, wie durch die Erfindung eine LF-Lokalsierung als Entscheidungsgrundlage dafür genutzt werden kann, über welche UWB-Transceiver kommuniziert werden soll.

## Patentansprüche

1. Verfahren zum Verifizieren eines vorgegebenen räumlichen Maximalabstands (MAX) eines Funkschlüssels (11) bezüglich eines Kraftfahrzeugs (10), wobei eine Steuervorrichtung (26) mittels einer Funkeinrichtung (21) des Kraftfahrzeugs (10) zumindest ein elektromagnetisches Funksignal an den Funkschlüssel (11) aussendet und daraufhin ein jeweiliges elektromagnetisches Antwortsignal empfängt und zu jedem Funksignal jeweils auf der Grundlage des Funksignals und des zugehörigen Antwortsignals mittels einer Signallaufzeitmessung eine jeweilige Signallaufzeit ermittelt und überprüft, ob durch die Signallaufzeit ein vorbestimmtes Laufzeitkriterium (27) verletzt wird, und bei verletztem Laufzeitkriterium (27) eine Laufzeitüberschreitung (28) signalisiert,
**dadurch gekennzeichnet, dass** die Funkeinrichtung (21) mehrere Transceiver (22, 23) aufweist und die Steuervorrichtung (26) mittels einer Lokalisierungseinrichtung (14) eine Relativposition (16, 17, 18, 19) des Funkschlüssels (11) bezüglich des Kraftfahrzeugs (10) ermittelt und in Abhängigkeit von der ermittelten Relativposition (16, 17, 18, 19) nur einen oder einige der Transceiver (23) zum Aussenden des zumindest einen Funksignals auswählt und betreibt.

2. Verfahren nach Anspruch 1, wobei der eine oder die einigen der Transceiver (22, 23) anhand eines vorbestimmten Sichtkriteriums ausgewählt werden.

3. Verfahren nach einem der Ansprüche 1 oder 2, wobei die Steuervorrichtung (26) zum Lokalisieren des Funkschlüssels (11) ein jeweiliges LF-Signal vorgegebener Feldstärke und mit einer Frequenz kleiner als 200 kHz mittels einer jeweiligen Sendeantenne (15) der Lokalisierungseinrichtung (14) aussendet und aus dem Funkschlüssel (11) zu jedem LF-Signal einen Empfangsfeldstärkewert oder insgesamt eine Positionsangabe empfängt.

4. Verfahren nach einem der vorhergehenden Ansprüche, wobei das zumindest eine Funksignal ein UWB-Funksignal und/oder Bluetooth-Funksignal umfasst.

5. Steuervorrichtung (26) für ein Kraftfahrzeug (10), wobei die Steuervorrichtung (26) eine elektronische Schaltung aufweist, die dazu eingerichtet ist, ein Verfahren nach einem der vorhergehenden Ansprüche durchzuführen.

6. Kraftfahrzeug (10) mit einer Funkeinrichtung (21), die zumindest einen Transceiver (22, 23) zum Aussenden eines jeweiligen elektromagnetischen Funksignals und zum Empfangen eines jeweiligen elektromagnetischen Antwortsignals aufweist, **dadurch gekennzeichnet, dass** mit der Funkeinrichtung (21) eine Steuervorrichtung (26) nach Anspruch 5 gekoppelt ist.

7. Kraftfahrzeug (10) nach Anspruch 6, wobei das Kraftfahrzeug (10) eine Lokalisierungseinrichtung (14) zum Ermitteln einer Relativposition (16, 17, 18, 19) eines Funkschlüssels (11) bezüglich des Kraftfahrzeugs (10) aufweist.

## Claims

1. Method for verifying a prescribed maximum physical distance (MAX) of a radio key (11) in relation to a motor vehicle (10), wherein a control apparatus (26) uses a radio device (21) of the motor vehicle (10) to transmit at least one electromagnetic radio signal to the radio key (11) and subsequently receives a respective electromagnetic response signal and, for each radio signal, takes the radio signal and the associated response signal as a basis in each case for using a signal propagation delay measurement to ascertain a respective signal propagation delay and checks whether the signal propagation delay fails to satisfy a predetermined propagation delay criterion (27), and signals a transgression above the propagation delay (28) when the propagation delay criterion (27) is not satisfied,
**characterized in that**
the radio device (21) has multiple transceivers (22, 23), and the control apparatus (26) uses a localization device (14) to ascertain a relative position (16, 17, 18, 19) of the radio key (11) in relation to the motor vehicle (10) and takes the ascertained relative position (16, 17, 18, 19) as a basis for selecting and operating only one or some of the transceivers (23) to transmit the at least one radio signal.

2. Method according to Claim 1, wherein the one or some of the transceivers (22, 23) are selected on the basis of a predetermined visual criterion.

3. Method according to either of Claims 1 and 2, wherein the control apparatus (26) localizes the radio key (11) by transmitting a respective LF signal of prescribed field strength and at a frequency of less than 200 kHz by means of a respective transmission antenna (15) of the localization device (14) and receiving from the radio key (11) a reception field strength value or, overall, a position statement for each LF signal.

4. Method according to one of the preceding claims, wherein the at least one radio signal comprises a UWB radio signal and/or Bluetooth radio signal.

5. Control apparatus (26) for a motor vehicle (10), wherein the control apparatus (26) has an electronic circuit configured to perform a method according to any of the preceding claims.

6. Motor vehicle (10) having a radio device (21) that has at least one transceiver (22, 23) for transmitting a respective electromagnetic radio signal and for receiving a respective electromagnetic response signal, **characterized in that** the radio device (21) has a control apparatus (26) according to Claim 5 coupled to it.

7. Motor vehicle (10) according to Claim 6, wherein the motor vehicle (10) has a localization device (14) for ascertaining a relative position (16, 17, 18, 19) of a radio key (11) in relation to the motor vehicle (10).

## Revendications

1. Procédé permettant de vérifier une distance spatiale maximale prédéfinie (MAX) d'une clé à radiocommande (11) par rapport à un véhicule automobile (10), dans lequel un dispositif de commande (26) émet au moyen d'un dispositif radio (21) du véhicule automobile (10) au moins un signal radio électromagnétique à la clé à radiocommande (11) et reçoit alors un signal de réponse électromagnétique respectif et détermine pour chaque signal radio, respectivement sur la base du signal radio et du signal de réponse associé, au moyen d'une mesure de temps de propagation de signal un temps de propagation de signal respectif, et vérifie si le temps de propagation de signal ne respecte pas un critère de temps de propagation prédéterminé (27), et en cas de non respect du critère de temps de propagation (27), signale un dépassement de temps de propagation (28),
**caractérisé en ce que** le dispositif radio (21) présente plusieurs émetteurs-récepteurs (22, 23), et le dispositif de commande (26) détermine au moyen d'un dispositif de localisation (14) une position relative (16, 17, 18, 19) de la clé à radiocommande (11) par rapport au véhicule automobile (10), et sélectionne et exploite en fonction de la position relative déterminée (16, 17, 18, 19) un seul ou certains seulement des émetteurs-récepteurs (23) pour l'émission du au moins un signal radio.

2. Procédé selon la revendication 1, dans lequel ledit un ou les plusieurs des émetteurs-récepteurs (22, 23) est/sont sélectionné(s) à l'aide d'un critère visuel prédéterminé.

3. Procédé selon l'une quelconque des revendications 1 ou 2, dans lequel, pour localiser la clé à radiocommande (11), le dispositif de commande (26) émet un signal LF respectif d'une intensité de champ prédéfinie et d'une fréquence inférieure à 200 kHz au moyen d'une antenne d'émission respective (15) du dispositif de localisation (14), et reçoit à partir de la clé à radiocommande (11) pour chaque signal LF une valeur d'intensité de champ de réception ou globalement une indication de position.

4. Procédé selon l'une quelconque des revendications précédentes, dans lequel ledit au moins un signal radio comprend un signal radio ULB et/ou un signal radio Bluetooth.

5. Dispositif de commande (26) pour un véhicule automobile (10), dans lequel le dispositif de commande (26) présente un circuit électronique qui est aménagé pour exécuter un procédé selon l'une quelconque des revendications précédentes.

6. Véhicule automobile (10) comprenant un dispositif radio (21) qui présente au moins un émetteur-récepteur (22, 23) pour émettre un signal radio électromagnétique respectif et pour recevoir un signal de réponse électromagnétique respectif, **caractérisé en ce qu'**un dispositif de commande (26) selon la revendication 5 est couplé avec le dispositif radio (21).

7. Véhicule automobile (10) selon la revendication 6, dans lequel le véhicule automobile (10) présente un dispositif de localisation (14) pour déterminer une position relative (16, 17, 18, 19) d'une clé à radiocommande (11) par rapport au véhicule automobile (10) .
